# EUROPÄISCHE PATENTSCHRIFT

(11) **EP 2 289 297 B1**
(45) Veröffentlichungstag und Bekanntmachung des Hinweises auf die Patenterteilung: **18.04.2018**
(21) Anmeldenummer: 10401139.0
(22) Anmeldetag: 18.08.2010
(51) Int. Cl.: A01C 7/04

(54) **Pneumatische Einzelkornsämaschine**
Pneumatic single grain seeder
Semoir monograine pneumatique

(30) Priorität: 25.08.2009 DE 102009043844
(43) Veröffentlichungstag der Anmeldung: 02.03.2011
(73) Patentinhaber: Amazonen-Werke H. Dreyer GmbH & Co. KG, 49205 Hasbergen (DE)
(72) Erfinder: Brüggemann, Klaus, 27777 Ganderkesee (DE); Mertens, Daniel, 26123 Oldenburg (DE)

(56) Entgegenhaltungen:
- EP-A1- 1 704 762
- AU-A- 1 685 476
- DE-A1- 10 140 342
- DE-A1-102005 039 317
- US-A- 3 698 332

## Beschreibung

Die Erfindung betrifft eine pneumatische Einzelkornsämaschine gemäß des Oberbegriffes des Patentanspruches 1.

Eine derartige Einzelkornsämaschine ist in der US 3 698 332 gezeigt.

Eine derartige Einzelkornsämaschine ist beispielsweise durch die DE 101 40 342 B4 bekannt. Bei dieser pneumatischen Einzelkornsämaschine wird die Abdichtung durch zwei beabstandete Spaltdichtungen verwirklicht. Diese Spaltdichtungen sind zwei einen Zwischenraum einschließenden Seitenwänden zugeordnet. Hierdurch soll ein Zwischenraum geschaffen werden, in dem ein Mitteldruck zwischen dem Überdruck im Vereinzelungsbereich der Vereinzelungstrommel und dem Atmosphärenbereich vorhanden ist. Bei dem Ausbringen von kleinkörnigem Saatgut, wie beispielsweise Raps, können sich diese kleinen Saatkörner in dem Spalt der Spaltdichtung festsetzen bzw. durch ihn hindurch treten. Dieses ist nachteilig.

Der Erfindung liegt die Aufgabe zugrunde, auf einfach Weise eine ausreichende Abdichtung im Vereinzelungs- und/oder Druckdifferenzbereich der Vereinzelungstrommel auf einfache Weise zu erreichen.

Diese Aufgabe wird erfindungsgemäß durch die kennzeichnenden Merkmale des Anspruches 1 gelöst.

Infolge dieser Maßnahmen wird durch die auf der Trommeloberfläche aufliegenden flexiblen Dichtmittel eine vollständig Abdichtung der Seitenwand zu der Trommeloberfläche der Vereinzelungstrommel erreicht, so dass auch keine kleinen Saatkörner durch den Bereich zwischen Dichtelementen bzw. Seitenwand und der Trommeloberfläche nach außen dringen oder sich in dem Bereich zwischen Seitenwänden und Trommeloberfläche festsetzen können.

Eine einfache Ausgestaltung flexibler Dichtmitteln, die auf der Trommeloberfläche aufliegen lässt sich dadurch verwirklichen, dass die Dichtmittel bürstenartig ausgebildet sind.

In einfacher Weise sind diese Dichtmittel als streifenartige Bürstenmittel ausgebildet.

Weitere Einzelheiten der Erfindung sind der Beispielsbeschreibung und den Zeichnungen zu entnehmen. Hierbei zeigen
- Fig. 1: die Vereinzelungstrommel, welche in dem Vereinzelungsgehäuse, von dem lediglich die beiden Seitenwände dargestellt sind, angeordnet ist, in perspektivischer Darstellung,
- Fig. 2: die linke Seite der Vereinzelungstrommel mit zugeordneter Seitenwand in perspektivischer Darstellung gemäß Fig. 1 und in vergrößertem Maßstab,
- Fig. 3: den rechten Bereich der Vereinzelungstrommel mit zugeordnetem Dichtelement, wobei die rechte Seitenwand nicht dargestellt ist, nach Darstellungsweise gemäß Fig. 1 im vergrößertem Maßstab und

- Fig. 4: die Ausgestaltung und Zuordnung des Dichtmittels zu der Vereinzelungstrommel im vergrößertem Maßstab und gleicher Darstellungsweise wie Fig. 3.

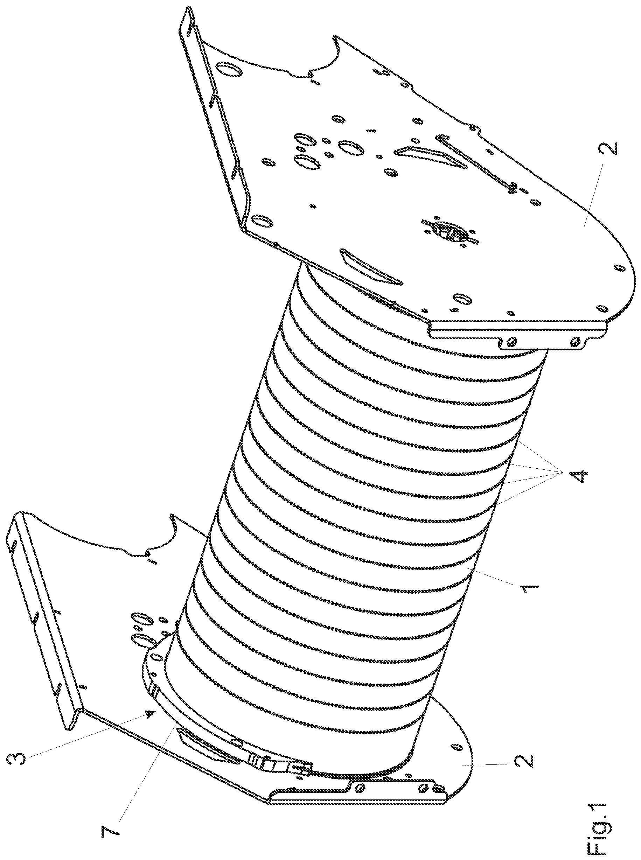

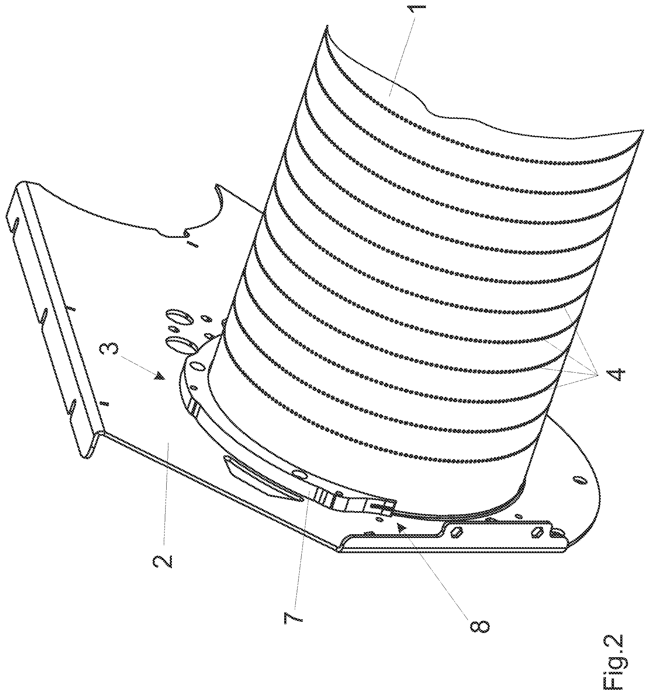

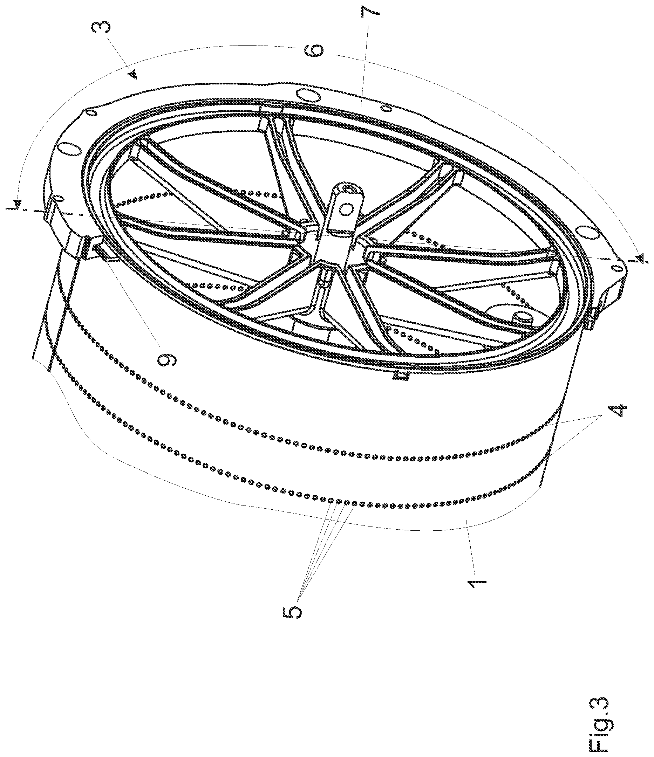

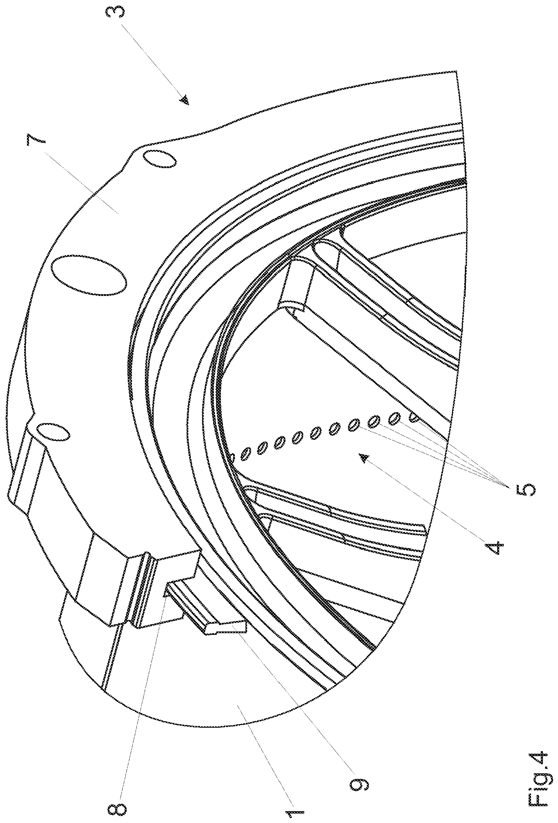

Die pneumatische Einzelkornsämaschine, von der gemäß den Fig. 1 bis 4 lediglich die Vereinzelungstrommel 1, die Seitenwände 2 des Vereinzelungsgehäuses und die zwischen der Oberfläche der Vereinzelungstrommel 1 und den Seitenwänden 2 angeordneten Dichtmittel 3 dargestellt sind.

Die Vereinzelungstrommel 1 weist in Perforationsreihen 4 angeordnete Perforationen 5 auf. In bekannter Weise werden die Perforationen 5 der Vereinzelungstrommel 1 mittels eines nicht dargestellten Gebläses in einem Bereich des Vereinzelungsgehäuses auf der Außenseite mit einem Überdruck gegenüber dem Atmosphärendruck beaufschlagt. Dieser mit Überdruck beaufschlagte Bereich wird als Druckdifferenzbereich 6 oder Vereinzelungsbereich der Vereinzelungstrommel 1 bezeichnet. Somit können sich, wenn die Perforationen in der Vereinzelungstrommel 1, die mittels eines motorischen Antriebes rotierend angetrieben wird, durch den Saatgutvorrat geführt wird, die Saatkörner an den Perforationen 5 aufgrund der durch den Überdruck erzeugten Druckdifferenz anlagern. Auf der Innenseite der Trommel 1 und der Perforationen 5 liegt nämlich der Atmosphärendruck an.

Die Trommeloberfläche der Vereinzelungstrommel 1 ist im Vereinzelungs- und Druckdifferenzbereich 6 mittels Dichtmittel 3 gegenüber den Seitenwänden 2 des Vereinzelungsgehäuses abgedichtet, damit der Überdruck gegenüber dem Atmosphärendruck im Vereinzelungsgehäuse erzeugt werden kann. Die Dichtmittel 3 weisen die Dichthalterung 7 auf. In der Dichthalterung 7 ist eine Nut 8 angeordnet. In dieser Nut 8 der Dichthalterung 7 sind nach außen überstehende bürstenartige Dichtelemente 9 angeordnet. Diese Dichtelemente 9 sind streifenartige Bürstenelemente. Aufgrund ihrer Ausgestaltung sind sie flexibel ausgebildet und liegen auf der Trommeloberfläche im Vereinzelungsbereich und Druckdifferenzbereich 6 auf der Trommeloberfläche der Trommel 1 auf. Hierdurch wird verhindert, dass ein Spalt zwischen den Enden der Dichtelemente 9, die den Seitenwandungen 2 zugeordnet sind, und der Trommeloberfläche entsteht. Hierdurch ist gewährleistet, dass auch kleine Saatkörner, wie beispielsweise Raps sich nicht in den Dichtspalt zwischen Trommeloberfläche und Seitenwandungen 2 festsetzen können oder durch diesen Spalt nach außen dringen.

Somit wird durch die als bürstenartige Dichtmittel 9 oder streifenartige Bürstenelemente 9 ausgebildeten flexiblen Dichtmittel eine gute Abdichtung der Trommeloberfläche gegenüber den Seitenwandungen 2 erreicht.

## Patentansprüche

1. Pneumatische Einzelkornsämaschine mit einem mit Druck beaufschlagbaren Saatgutvorratsbehälter, wobei in dem Behälter eine angetriebene Vereinzelungstrommel angeordnet ist, wobei die Trommel zumindest in deren Vereinzelungsbereich, in welchem sich Saatkörner beim Durchführen durch den Saatgutvorrat aufgrund von der an den Perforation der Trommel anliegenden Druckdifferenz anlagern, in dem Bereich der Seitenwandungen des Saatgutvorratsbehälters mittels flexibler Dichtelemente gegenüber den Seitenwänden abgedichtet ist, **dadurch gekennzeichnet, dass** die Dichtelemente (3) als mit der Seitenwand (2) verbundene und auf die Trommeloberfläche zumindest in deren Vereinzelungsbereich und/oder Druckdifferenzbereich (6) aufliegende Dichtmittel (9) ausgebildet sind.

2. Einzelkornsämaschine nach Anspruch 1, **dadurch gekennzeichnet, dass** die Dichtmittel (9) bürstenartig ausgebildet sind.

3. Einzelkornsämaschine nach Anspruch 1, **dadurch gekennzeichnet, dass** die Dichtmittel als streifenartige Bürstenelemente (9) ausgebildet sind.

## Claims

1. Pneumatic single grain seed drill having a pressurizable seed storage container, wherein a driven singling drum is arranged in the container, wherein the drum is sealed off from the side walls of the seed storage container, in the region of said side walls, by means of flexible sealing elements, at least in the singling region of said drum in which grains are taken up, when passing through the seed storage container, on account of the pressure difference applied to the perforations of the drum, **characterized in that** the sealing elements (3) are configured as sealing means (9) that are connected to the side wall (2) and rest on the drum surface at least in the singling region and/or pressure-difference region (6) thereof.

2. Single grain seed drill according to Claim 1, **characterized in that** the sealing means (9) are configured in a brush-like manner.

3. Single grain seed drill according to Claim 1, **characterized in that** the sealing means are configured as strip-like brush elements (9).

## Revendications

1. Semoir monograine pneumatique comprenant un récipient de stockage de semences pouvant être sollicité en pression, un tambour de séparation entraîné étant disposé dans le récipient, le tambour, au moins dans sa région de séparation dans laquelle ddes graines s'accumulent sous l'effet de la différence de pression s'appliquant contre les perforations du tambour lors du passage à travers le stock de semences, étant étanchéifié dans la région des parois latérales du récipient de stockage de semences au moyen d'éléments d'étanchéité flexibles par rapport aux parois latérales, **caractérisé en ce que** les éléments d'étanchéité (3) sont réalisés sous forme de moyens d'étanchéité (9) connectés à la paroi latérale (2) et s'appliquant sur la surface du tambour au moins dans sa région de séparation et/ou dans sa région de différence de pression (6) .

2. Semoir monograine selon la revendication 1, **caractérisé en ce que** les moyens d'étanchéité (9) sont réalisés sous forme de brosses.

3. Semoir monograine selon la revendication 1, **caractérisé en ce que** les moyens d'étanchéité sont réalisés sous forme d'éléments de brosses (9) en forme de bande.
